**Europäisches Patentamt**

**European Patent Office**

**Office européen des brevets**

(19)

(11) Veröffentlichungsnummer: **0 134 278**
**B1**

(12)

# EUROPÄISCHE PATENTSCHRIFT

(45) Veröffentlichungstag der Patentschrift:
**16.03.88**

(21) Anmeldenummer: **83108472.8**

(22) Anmeldetag: **29.08.83**

(51) Int. Cl.⁴: **G 11 B 23/02**

(54) **Behälter mit Verriegelungseinrichtung zum Aufbewahren von Aufzeichnungsträgern.**

(43) Veröffentlichungstag der Anmeldung:
**20.03.85 Patentblatt 85/12**

(45) Bekanntmachung des Hinweises auf die Patenterteilung:
**16.03.88 Patentblatt 88/11**

(84) Benannte Vertragsstaaten:
**AT BE CH DE FR GB IT LI NL SE**

(56) Entgegenhaltungen:
**DE-A-2 521 371**
**DE-U-7 922 024**
**FR-A-2 274 109**
**US-A-3 651 700**
**US-A-4 216 857**

(73) Patentinhaber: **idn inventions and development of novelties ag, Hartbertstrasse 9, CH- 7002 Chur (CH)**

(72) Erfinder: **Ackeret, Peter, Allmendstrasse 18, CH-8700 Küsnacht (CH)**

(74) Vertreter: **Dipl.- Ing. H. Marsch Dipl.- Ing. K. Sparing Dipl.- Phys.Dr. W.H. Röhl Patentanwälte, Rethelstrasse 123, D-4000 Düsseldorf (DE)**

## Beschreibung

Die Erfindung betrifft eine Vorrichtung zum Aufbewahren von Aufzeichnungsträgern, wie Magnetbandkassetten, Disketten, Schall- oder Bildplatten.

Eine Vorrichtung, die die im Oberbegriff des Patentanspruchs 1 genannten Merkmale aufweist, ist aus der US-A-4 216 857 bekannt. Diese Vorrichtung dient zum Aufbewahren von Kompaktkassetten. In einander zugekehrten Flächen des Gehäuseteils und des Transportschiebers sind im Querschnitt etwa halbkreisförmige Nuten eingearbeitet; im Gehäuse befindet sich eine kurze gerade Nut senkrecht zur Bewegungsrichtung des Schiebers, während der letztere eine Längsnut mit einer Endgabelung besitzt, deren Zinken in einen Haltewinkel auslaufen. Zwischen Gehäuse und Schieber ist eine Stahlkugel in die Nuten lose eingelegt, die als Kupplungsteil dient. Sie wird von den Nutwandungen der gehäuseseitigen Nut abgestützt und längs der schieberseitigen Nut geführt. Diese Führung versagt jedoch, wenn die Vorrichtung in einer ungünstigen Lage benutzt wird, in der die Schwerkraft verhindert, daß die Kugel der gewünschten Bahn folgt.

Aufgabe der Erfindung ist es, die Vorrichtung derart weiterzubilden, daß sie in jeder Lage betriebssicher funktioniert.

Zur Lösung dieser Aufgabe dienen die im kennzeichnenden Teil des Patentanspruchs 1 genannten Merkmale.

Vorrichtungen mit Verriegelungen, die durch Bewegen eines Einschubteils in derselben Richtung alternierend verriegelt und entriegelt werden, sind noch aus anderen Druckschriften bekannt:

Eine Vorrichtung zum Aufbewahren von Kompaktkassetten ist aus der US-A-4 046 255 bekannt. Sie umfaßt einen im Gehäuse geführten Schieber, der ein hakenartiges Verriegelungselement trägt. Dieses wird beim Verriegeln elastisch verformt und bleibt in seiner Verriegelungsposition vorgespannt, so daß es beim Entriegeln in eine Freigabeposition zurückfedern kann. Ein solches Verriegelungselement ist, wenn es - wie üblich - aus Kunststoff gefertigt wird, nicht zuverlässig, da einerseits der Kunststoff zum Kaltfließen neigt, die Federvorspannung also verloren geht, und andererseits bei höheren Temperaturen die Verriegelung vollends versagt. Mit Temperaturen in der Größenordnung von 80°C und mehr muß man aber insbesondere in Kraftfahrzeugen rechnen.

Eine weitere Aufbewahrungsvorrichtung für Kompaktkassetten ist in Fig. 5-8 der US-A-3 995 921 dargestellt. Diese Vorrichtung hat keinen Schieber, sondern die Federanordnung, welche unmittelbar die Kassette in Entnahmerichtung vorspannt, verriegelt sich an einem Führungsvorsprung des Gehäuses, wobei sie in eine Entriegelungsposition vorgespannt bleibt. Dabei ist die Kassette nur unzureichend geschützt, und die Federanordnung ist kompliziert und daher teuer. Wegen der sehr kleinen in Formschluß gelangenden Flächen ist die Verriegelung auch unsicher, insbesondere nicht rüttelfest.

Schließlich ist aus der US-A-3 836 222 eine Vorrichtung zum Aufbewahren von Kompaktkassetten bekannt, die einen komplizierten Verriegelungsmechanismus aufweist, welcher noch dazu unsicher ist, da es vom Einschiebehub abhängt, ob verriegelt oder entriegelt wird. Hier folgen also nicht, wie im Oberbegriff des Patentanspruchs 1 vorausgesetzt, Verriegelung und Entriegelung automatisch alternierend aufeinander.

Ausführungsbeispiele des Gegenstandes der Erfindung werden nachstehend unter Bezugnahme auf die beigefügten Zeichnungen im einzelnen erläutert.

Fig. 1 zeigt in Draufsicht auf den Schieber bei aufgeschnittenem Gehäuse einen Behälter für eine Kompaktkassette,

Fig. 2 stellt einen gleichartigen Behälter mit einer abgewandelten Verriegelungsbauart analog zu Fig. 1 dar,

Fig. 3 zeigt analog zu Fig. 1 und 2 einen Behälter mit einer dritten Ausführungsform des Verriegelungsmechanismus,

Fig. 4 zeigt in perspektivischer Explosionsdarstellung die Verriegelungskomponenten und ihr Zusammenwirken bei der Ausführungsform nach Fig. 1,

Fig. 5 zeigt perspektivisch einen Teil des Riegelkäfigs von der der Kulisse zugewandten Seite,

Fig. 6 ist eine Draufsicht auf die Kulisse, in der schematisch die Bahn des Riegels angedeutet ist,

Fig. 7 zeigt vergrößert den Verriegelungsmechanismus aus Fig. 2 von unten, ohne Kulisse,

Fig. 8 stellt denselben Verriegelungsmechanismus von oben im entriegelten Zustand dar,

Fig. 9 ist ein Querschnitt nach Linie 9-9 der Fig. 8,

Fig. 10 ist eine vergrößerte Darstellung der Fig. 9,

Fig. 11 zeigt in Draufsicht auf den teilweise geöffneten Schieber bei aufgeschnittenem Gehäuse einen Behälter für eine Mehrzahl von Mikrokassetten,

Fig. 12 ist eine Teildraufsicht analog zu Fig. 11 mit geänderter Plazierung der Verriegelung,

Fig. 13 ist eine Teilinnenansicht in Richtung des Pfeiles 13 in Fig. 12,

Fig. 14 ist eine Schnittdarstellung der Riegelanordnung aus Fig. 12,

Fig. 15 ist ein Vertikalschnitt durch einen Behälter für Kompaktschallplatten, wobei einer der beiden Schieber teilweise geöffnet ist,

Fig. 16 ist eine Draufsicht auf einen Horizontalschnitt zu Fig. 15,

Fig. 17 zeigt in Ansicht auf die Gehäuserückwand von innen aus Fig. 15 die Anordnung der Kulissen,

Fig. 18 ist ein Teilvertikalschnitt senkrecht zu der Schieberbewegungsrichtung des Behälters nach Fig. 15-17,

Fig. 19 zeigt perspektivisch einen Behälter mit acht Schiebern für Kompaktkassetten ähnlich Fig. 1-3, und

Fig. 20 ist eine Teilansicht nach Pfeil 20 der Fig. 19.

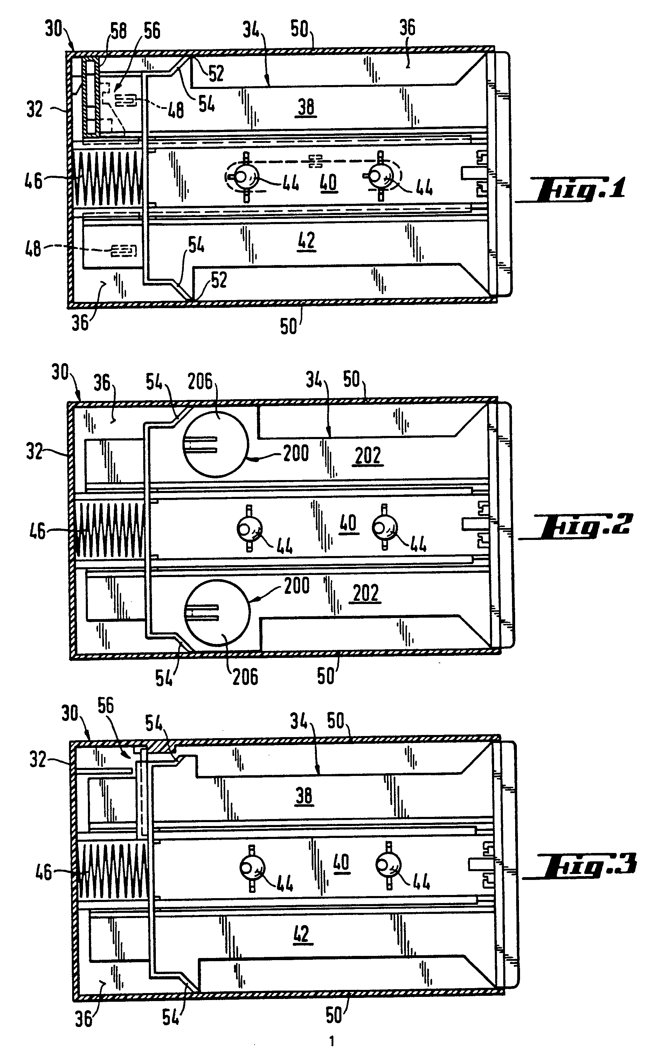

Man erkennt in Fig. 1 einen Behälter für Kompaktkassetten mit einem im wesentlichen quaderförmigen Gehäuse 30, das an seiner einen Rückwand 32 gegenüberliegenden Seite für den Durchtritt eines Schiebers 34 offen ist. Der Schieber ist längs Schienen, die innen an den Gehäuseboden 36 angeformt sind, mit einer oder, wie hier gezeigt, drei zueinander parallelen Bodenplatten 38, 40 und 42 geführt. Die mittlere Bodenplatte trägt seitlich federnd verschiebliche Sperrnocken 44 für die Wickelnaben der Kassette, so daß diese nach Einlegen einer Kassette arretiert werden. Eine Schraubendruckfeder 46 spannt den Schieber in eine geöffnete Position vor, die durch Anschläge 48 definiert ist und in der der Schieber eine Position einnimmt, in welcher die längs Gehäuseseitenwandungen 50 laufenden Endkanten 52 von Führungsplatten 54 etwa bündig mit der Gehäuseöffnung sind.

In der eingeschobenen (in Fig. 1 gezeichneten) Position des Schiebers wird dieser mittels einer Verriegelungseinrichtung 56 manuell auslösbar blockiert.

Die Verriegelungseinrichtung umfaßt die folgenden Komponenten:
- einen Riegel 60,
- eine Riegelführung 62,
- eine Kulisse 64,
- einen Steuernocken 66.

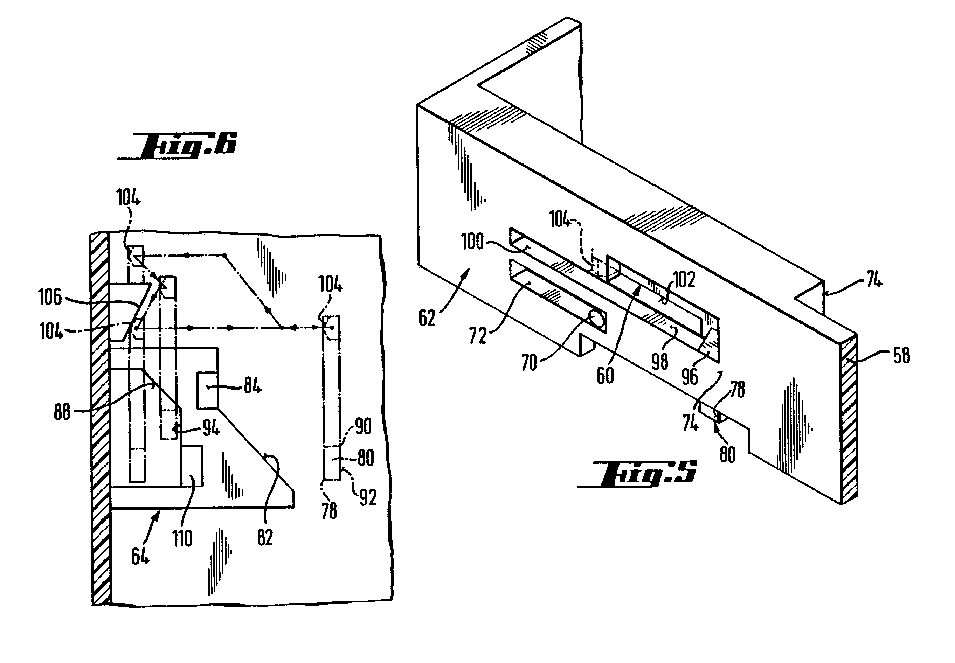

Diese, in Fig. 1 nur angedeuteten Komponenten sind in den Fig. 4 bis 6 im Detail dargestellt, und es wird im folgenden auf diese Zeichnungen bezuggenommen.

Die beiden Komponenten Riegel 60 und Riegelführung 62 sind an dem Schieber angeordnet, Kulisse 64 und Steuernocken am Gehäuse; dies könnte aber ohne Änderung der Funktion auch umgekehrt sein, wenn es konstruktiv zweckmäßig erschiene.

In Fig. 1 ist die Riegelführung in einer hinteren Endwand 58 des Schiebers ausgebildet; auch dies ist nicht zwingend, wie bei der Erläuterung weiterer Ausführungsbeispiele noch deutlich werden wird. In den Fig. 4 bis 6 soll aber die Konfiguration aus Fig. 1 zugrundegelegt sein.

Der Riegel 60 ist ein Kunststoffspritzteil mit im wesentlichen flach-rechteckiger Grundform. Er weist angeformte koaxiale Zapfen 68, 70 auf, die in einem Langloch 72 der Riegelführung 62 längs diesem verschieblich sind, um deren Achse aber der Riegel auch schwenken kann.

Die Riegelführung umfaßt zwei kongruente Führungsplatten 74, von denen in Fig. 4 nur die der Kulisse zugewandte dargestellt ist, sowie einen Decksteg 76. Die Riegelführung bildet demgemäß einer "Käfig", in dem der Riegel lose an seinen Zapfen 68, 70 aufgehangen ist.

Es sei nun angenommen, daß der Riegel eine Position in dem Käfig einnimmt, in der seine Zapfen sich nahe dem linken Ende (in Fig. 4) des im Käfig vorgesehenen Langlochs 72 befindet. Aus dieser Position werde der Schieber in Richtung Kulisse verschoben.

Dann trifft zunächst die Kante 78 eines Fortsatzes 80 des Riegels auf eine Schrägfläche 82 der Kulisse 64, und deren Winkellage relativ zur Verschieberichtung des Schiebers ist unter Berücksichtigung der Reibungskoeffizienten so bemessen, daß der Riegel längs der Schrägfläche 82 gleiten kann. Dabei gleiten auch die Zapfen 68, 70 längs der Langlöcher 72. Am Ende der Schrägfläche 82 weist die Kulisse eine Rampe 84 auf, längs der der Riegelfortsatz 80 hochgleitet, wobei eine angeformte Rückstellfeder 86 des Riegels sich am Deckssteg 76 abstützt. Dabei schwenkt der Riegel um seine Zapfen, die sich nahe dem rechten Ende (in Fig. 4) des Langlochs 72 befinden. In Schieberichtung des Schiebers hinter der Rampe 84 befindet sich eine weitere Schrägfläche 88, hinter der der Fortsatz 80 von der Rückstellfeder 86 wieder nach unten geschwenkt wird. Zugleich läuft der Schieber auf einen Anschlag auf, und der Benutzer läßt los. Die Feder 46 drückt nun den Schieber in Ausschubrichtung, und die Kante 90 des Riegelfortsatzes kann längs der Schrägfläche 88 gleiten, bis die Anschlagfläche 92 des Fortsatzes an der Gegenanschlagfläche 94 der Kulisse anliegt: Der Schieber ist jetzt verriegelt. Der Schwenkweg des Riegels nach unten wird dabei durch eine Anschlagnase 96 begrenzt, die in einem weiteren Langloch 98 des Käfigs läuft; die Auslenkung nach oben ist durch den Abstand zwischen Rückstellfeder 86 und dem restlichen Riegelkörper begrenzt.

Oberhalb und seitlich versetzt zur Kulisse 64 ist noch der Steuernocken 66 vorgesehen, der aber die insoweit beschriebenen Bewegungsabläufe des Riegels nicht behindern kann, da er durch einen das Langloch 98 verlängernden Schlitz 100 sowie durch einen zu diesem kongruenten Schlitz 102 des Riegels greifen kann.

Nimmt aber der Schieber seine verriegelte Position, wie beschrieben, ein, und drückt man erneut auf den Schieber bis zum Anschlag, trifft eine Steuerkante 104 des Riegels 60, die sich oberhalb der Zapfen 68, 70 in Verlängerung von dessen Schlitz 102 befindet (am besten in Fig. 5 erkennbar), auf die Schrägfläche 106 des Steuernockens 66 und wird von diesem weiter nach links (in Fig. 4) verschoben, bis die Kante 108 des Fortsatzes vor der zweiten Rampe 110 der Kulisse 64 steht. Diese Position erreicht der Riegel, wenn der Schieber bis zu seinem Anschlag eingedrückt worden ist. Läßt man nun den Schieber los, so wird der Riegel wieder um seine Zapfen nach oben verschwenkt, weil sein Fortsatz über die Rampe 110 läuft, und der Schieber kann ganz aus dem Gehäuse ausgestoßen werden.

Man erkennt in der Deckleiste noch zwei Einbuchtungen 112, angepaßt an den Widerlagerfortsatz 114 der Rückstellfeder 86. Diese Einbuchtungen befinden sich dort, wo dieser Fortsatz in der verriegelten bzw. entriegelten Position des Riegels steht, so daß dann die Rückstellfeder ohne Vorspannung ist; auf diese Weise besteht keine Gefahr des Kaltfließens für die ja auch aus Kunststoff bestehende Rückstellfeder.

Das geschilderte Verriegelungssystem weist eine Reihe von Vorzügen auf.

Es ist keine dauernd gespannte Feder nötig, um irgendeine der Komponenten in eine Vorzugslage vorzuspannen. Deshalb können alle Teile preiswert aus Kunststoff gefertigt werden.

Trotz eines relativ kleinen erforderlichen Hubes für Verriegeln und Entriegeln kann man eine relativ große, den Schieber haltende Fläche des Riegelfortsatzes in Eingriff bringen. Schließlich erkennt man auch, daß - wenn etwa durch Erschütterungen der Riegel bei geöffnetem Schieber bereits teilweise oder ganz seitlich verschoben worden ist - gleichwohl die Verriegelung in Eingriff gelangt, wenn der Schieber eingeschoben wird. Charakteristisch ist dabei, daß jeder Verschiebebewegung des Riegels eine eigene Steuerfläche (an Kulisse oder Steuernocken) sowie eine eigene Steuerkante am Riegel zugeordnet ist.

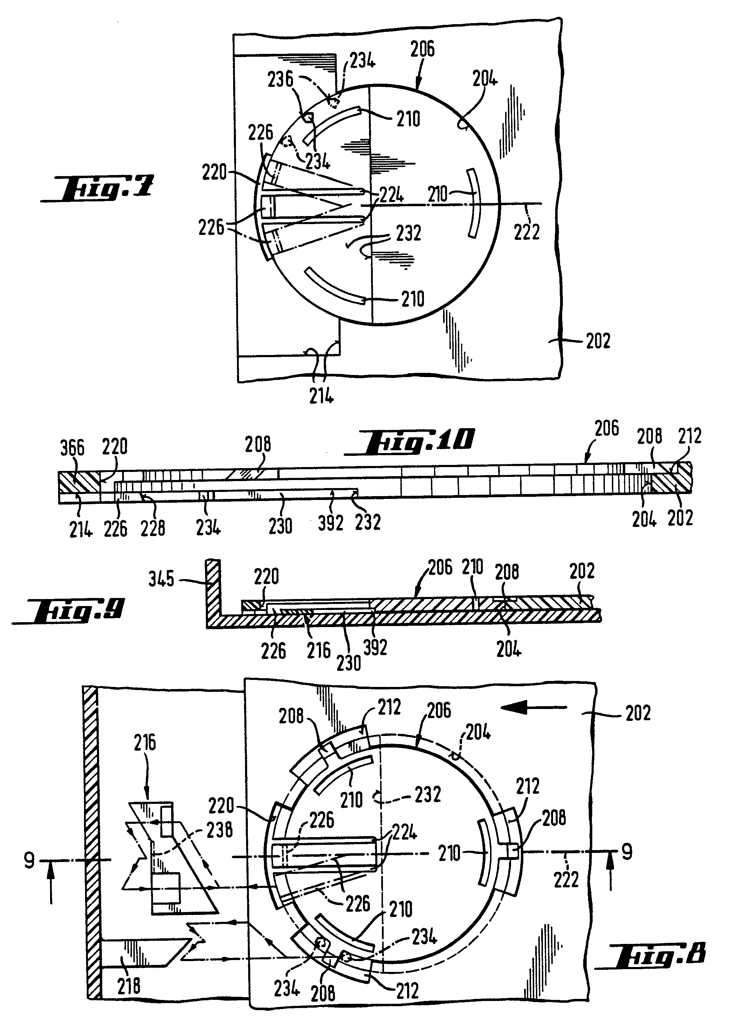

Der Behälter nach Fig. 2 entspricht im wesentlichen der Bauart nach Fig. 1, unterscheidet sich jedoch hinsichtlich der Verriegelung. Es sind zwei Verriegelungsvorrichtungen 200 vorgesehen, die nachstehend unter Bezugnahme auf die Fig. 7 bis 10 im einzelnen erläutert werden sollen.

Im Schieberboden 202 ist ein kreisrunder Durchbruch 204 vorgesehen, in den ein um einen begrenzten Winkel verdrehbarer Riegel 206 eingesetzt ist. Auf der Oberseite des Riegels 206 sind um 120° zueinander versetzt drei Krallen 208 vom Umfang nach außen vorstehend angeformt, die beim Einsetzen des Riegels in den Durchbruch nach innen einfedern könsen - hierfür sind die Schlitze 210 vorgesehen - und sich dann in je einer Eintiefung 212 auf der Schieberoberseite verankern; die Winkelerstreckung dieser Eintiefungen legt den maximalen Drehwinkel des Riegels fest. Innen stützt sich der Riegel an den einspringenden Umfangsabschnitten des Durchbruchs ab, die sich zwischen den Eintiefungen 212 befinden. Auf der Schieberunterseite befindet sich eine weitere Eintiefung 214, deren Tiefe an die Höhe einer Kulisse 216 und eines Steuernockens 218 angepaßt ist, welche am Gehäuseboden vorgesehen sind, und deren Länge und Breite in Fig. 7 erkennbar sind.

Schließlich weist der Schieberboden noch eine sich ganz durch seine Dicke erstreckende Ausnehmung 220 im Sektor zwischen denjenigen beiden Eintiefungen 212 auf, die sich beidseits der Schiebermittelebene 222 nahe der Kulisse 216 befinden.

In diesem Sektor weist der Riegel zwei Einschnitte 224 auf, die einen federnden Riegelfortsatz 226 begrenzen, welcher bei 228 hinterschnitten ist und unter dem sich ein Freiraum 230 entsprechend der Höhe von Kulisse 216 und Steuernocken 218 befindet. Dieser Freiraum wird von der Stufe 232 begrenzt. Ferner ist auf der Riegelunterseire noch ein Steuerkopf 234 angeformt, der eine Steuerkante 236 aufweist.

Die Kulisse 216 und der Steuernocken 218 wirken mit den Steuerkanten des Riegelfortsatzes 226 bzw. der Steuerkante 236 des Steuerkopfes 234 in ganz derselben Weise zusammen, wie dies oben für den gleit- und schwenkbeweglichen Riegel aus Fig. 4 bis 6 beschrieben wurde, wobei allerdings hier der Riegel zunächst im Uhrzeigersinne (gesehen in Fig. 8) und dann im Gegenuhrzeigersinne dreht und der Riegelfortsatz in Richtung dieser Drehachse ausgelenkt wird, wenn er die Kulissenrampen überläuft.

Der Hinterschneidung 228 des Riegelfortsatzes ist eine komplementäre Hinterschneidung 238 der Kulisse zugeordnet, damit nicht der Fortsatz abgleiten kann oder allmählich, wegen des auf ihn wirkenden Drehmoments, sich durch Kaltfluß verformt.

Man erkennt, daß die beschriebene Bauart keinen zusätzlichen Platz im Behälter beansprucht und mit sehr geringem Aufwand aus Kunststoffspritzteilen gefertigt werden kann.

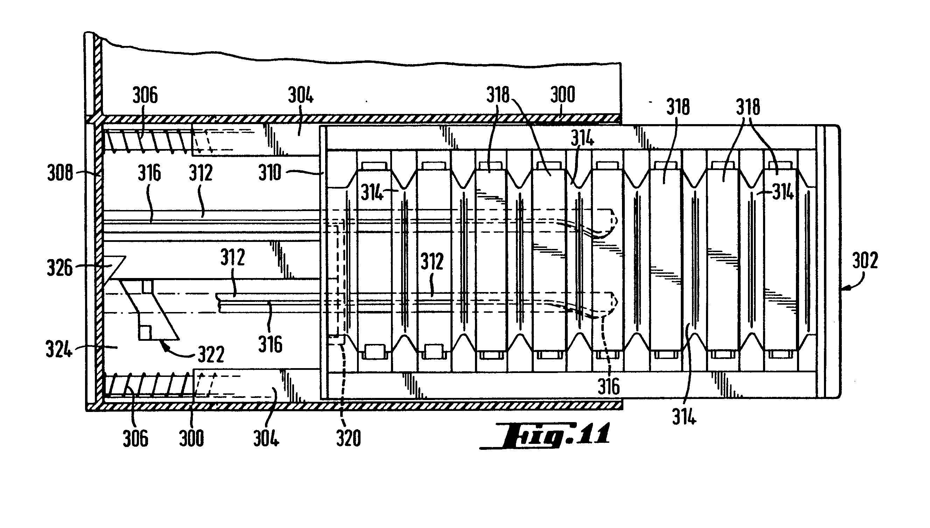

Die Fig. 11 zeigt ein weiteres Ausführungsbeispiel eines erfindungsgemäßen Behälters.

In einem Gehäuse 300 ist ein Schieber 302 gleitbeweglich geführt, in dem kleine Magnetbandkassetten, sogenannte Mikrokassetten, auf ihrem Kopfspiegel stehend nebeneinander in einzelnen Aufnahmefächern unterbringbar sind. Der Schieber 302 ist vollständig aus dem Gehäuse ausfahrbar; zu diesem Zweck sind im Gehäuse seitliche Schienen 304 geführt, die um etwa eine halbe Gehäusetiefe ausziehbar sind und auf denen wiederum, um etwa dieselbe Strecke ausziehbar, der Schieber gelagert ist. Zwei Schraubendruckfedern 306 durchsetzen die Schienen 304 und stützen sich einerseits an der Gehäuserückwand 308, andererseits an der Schieberrückwand 310 ab, so daß der Schieber in die ausgeschobene Position vorgespannt ist. Von der Gehäuserückwand erstrecken sich noch zwei Dorne 312 in den Schieber, dessen Rückwand und die Trennwände 314 zwischen den einzelnen Aufnahmefächern durchsetzend, und verriegeln mit einer Flosse 316 die Bandwickelnaben eingesetzter Kassetten 318.

Das Verriegelungssystem entspricht dem nach Fig. 1 und Fig. 4 bis 6: Man erkennt den in der Schieberrückwand vorgesehenen Riegelkäfig 320, die Kulisse 322 am Gehäuseboden 324 und den Steuernocken 326 an der Gehäuserückwand.

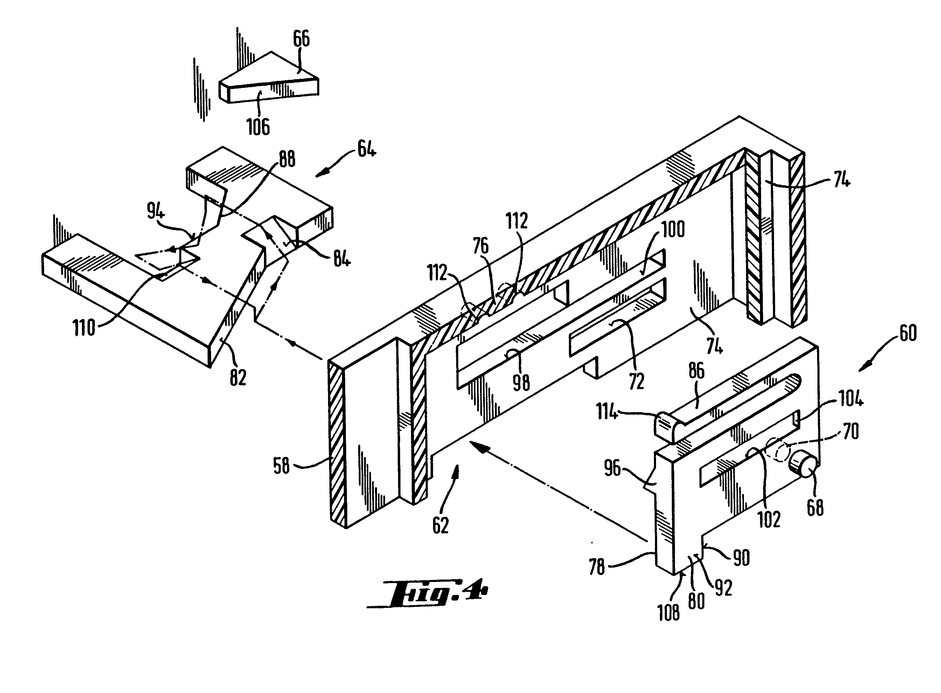

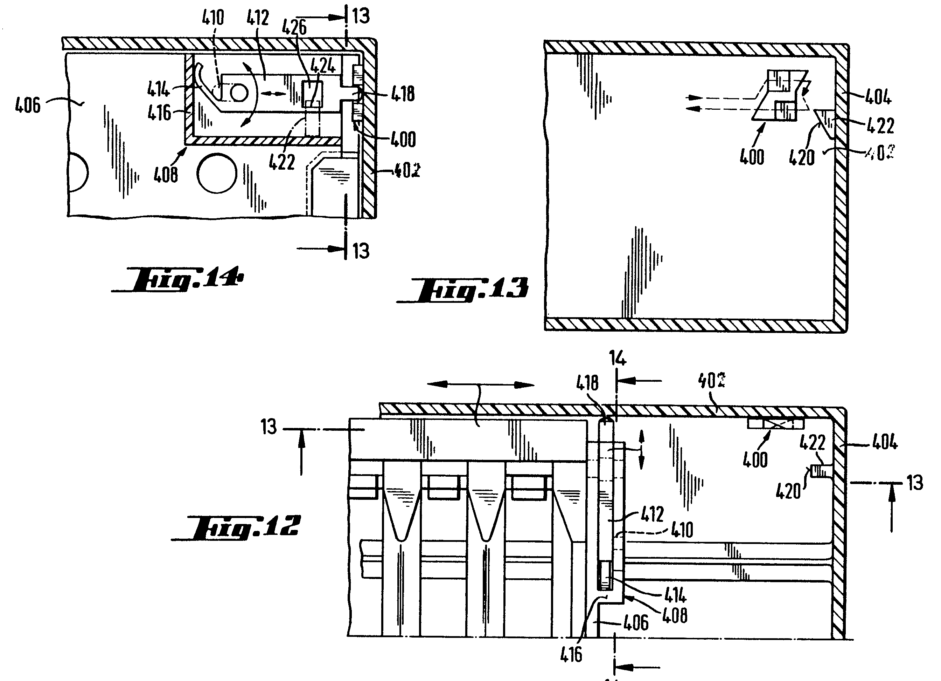

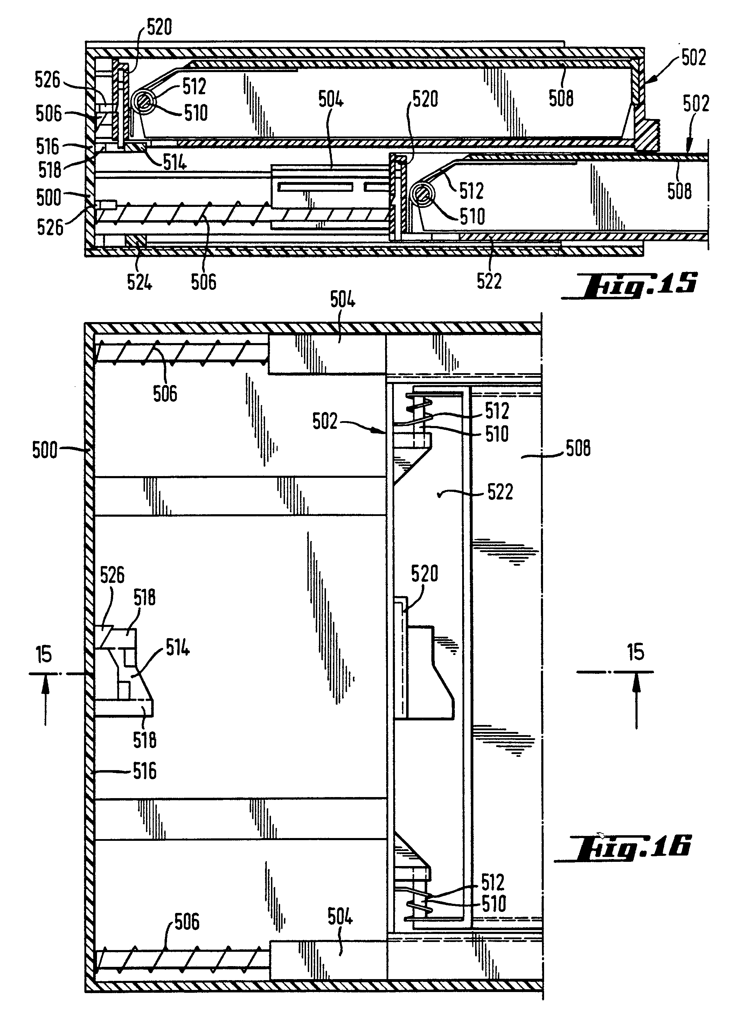

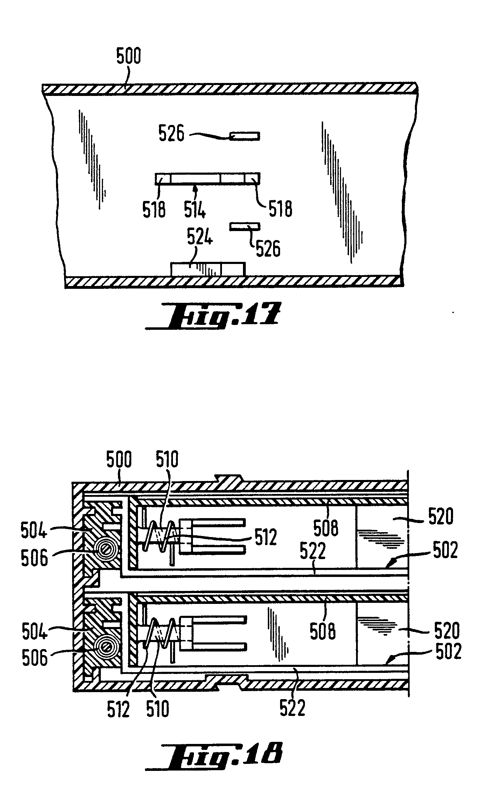

Die Figuren 12 bis 14 zeigen, wie das Verriegelungssystem in alternativer Form aufgebaut sein kann. Diese Bauart soll an einem Mikrokassettenbehälter ähnlich dem nach Fig. 11 erläutert werden; sie ist aber auch bei dem Kassettenbehälter für Kompaktkassetten gemäß Fig. 3 verwirklicht.

Die Kulisse 400 mit ihren Schrägflächen und Rampen entspricht den bisher erläuterten Ausführungsformen; sie ist aber hier an der Gehäuseseitenwand 402 ausgebildet, während der Steuernocken mit seiner Schrägfläche an die Gehäuserückwand 404 angeformt ist. In der Schieberrückwand 406 ist ein Riegelkäfig 408 ausgebildet, in dessen Langloch 410 ein Riegel 412 verschieb- und verschwenkbar gelagert ist. Er stützt sich mittels einer angeformten Blattfeder 414 an der Käfigendwand 416 ab und wirkt mit seinem Riegelfortsatz 418 mit der Kulisse zusammen, während die Schrägfläche 420 des Steuernockens 422, durch eine (nicht dargestellte) Öffnung des Riegelkäfigs greifend, mit einer Steuerkante 424 des Riegels, die an einem Riegeldurchbruch 426 vorgesehen ist, beim Öffnen des Behälters zusammenwirkt. Der Ablauf entspricht im übrigen den ausführlich zu Fig. 4 bis 6 erläuterten Funktionen.

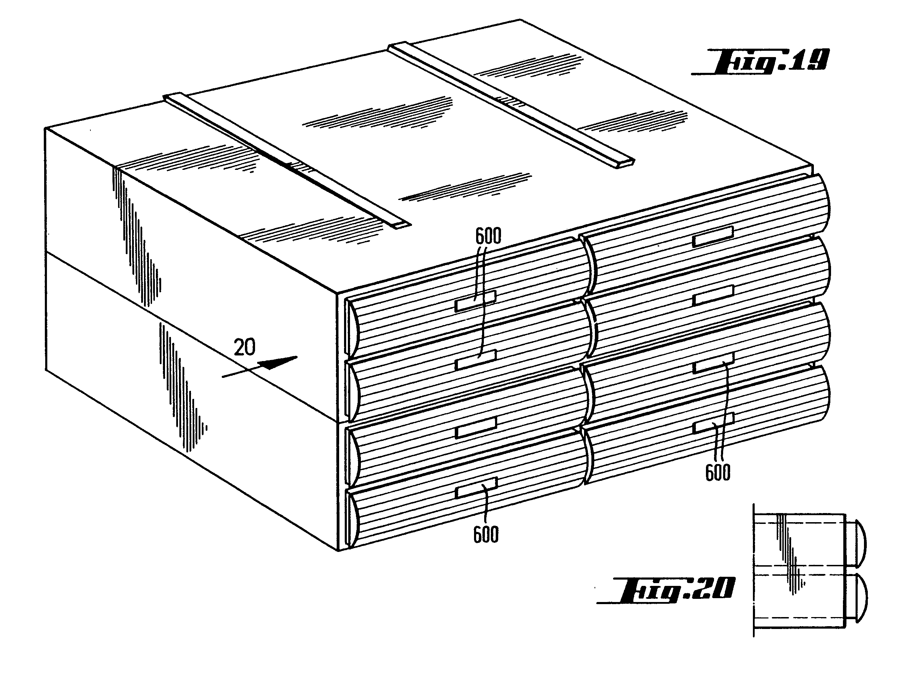

Das nächste Ausführungsbeispiel, in Fig. 15 bis 18 dargestellt, betrifft einen Behälter für Kompaktschallplatten.

Das Gehäuse 500 nimmt zwei übereinander angeordnete Schieber auf. Jeder Schieber 502 ist über Teleskopschienen 504 - ähnlich wie der Schieber in Fig. 11 - gleitbeweglich im Gehäuse geführt. Ebenso analog zu Fig. 11 sind Ausschubfedern 506 vorgesehen, die den Schieber in seine offene Position vorspannen. An den Schieber ist ein Deckel 508 mittels Bolzen 510 angelenkt, und eine Schenkelhalsfeder 512 auf einem der Bolzen spannt den Deckel in Öffnungsposition vor, das heißt in eine Position, in der er von dem Schieber weg hochklappt. Zwischen Schieberboden und Deckel können dann Taschen eingehangen sein, die sich harmonikaartig öffnen, wenn der Deckel hochklappt.

Die Verriegelung der beiden Schieber im Gehäuse erfolgt mittels Verriegelungssystemen nach Fig. 4 bis 6. Man erkennt jedoch, daß sich unter dem oberen Schieber kein Gehäuseboden befindet, so daß die ihm zugeordnete Kulisse 514 in der entsprechenden Höhe an der Gehäuserückwand 516 angebracht wird, wobei die Kulisse von zwei seitlich an ihr ansetzenden Armen 518 getragen ist. Unterhalb des Riegelkäfigs 520 weist der Boden 522 der Schieber einen zu der Kulisse 514 komplementären Ausschnitt auf, der auch den Armen 518 platz läßt. Die Anordnung der unteren Kulisse 524 und die Anordnung der beiden Steuernocken 526 entsprechen Fig. 4 bis 6.

Fig. 19 zeigt perspektivisch zwei formschlüssig zusammengefügte Behälter, bei denen jeweils ein Gehäuse vier Schieber enthält. Hier handelt es sich um Behälter für Kompaktkassetten. In den Schieberfrontwänden können Öffnungen 600 vorgesehen sein, hinter denen z. B. eine Signalflagge erscheint, wenn sich in dem Behälter eine Kassette befindet. Die Frontwandungen sind mit einer abgerundeten Kontur ausgebildet, die einerseits bedienungsfreundlich ist und andererseits das Verletzungsrisiko mildert, das bei einem Aufprall auf eine scharfe Gehäusekante bestünde, wenn der Behälter in einem Kraftfahrzeug mitgeführt wird.- Wie die Teilansicht nach Fig. 20 erkennen läßt, stehen die Schieber in der eingeschobenen und verriegelten Position um eine Strecke über die Gehäusefrontkante vor, die dem Auslösehub der Verriegelung entspricht.

In der Verriegelungsposition des Schiebers wirkt auf ihn die jeweils vorgesehene Federanordnung, die ihn in seine Entnahmeposition vorspannt. Die von ihr ausgeübte Kraft ergibt auf das Gehäuseteil einerseits, den Transportschieber andererseits wirkende Drehmomente bezüglich des Drehpunkts, der von dem Verriegelungsformschluß definiert wird. Bei der Anordnung dieser Stelle sollte daher ein möglichst kurzer Hebelarm gewählt werden, damit nicht die Drehmomente durch Kaltfluß des Kunststoffs, insbesondere bei höheren Temperaturen, zu bleibenden Deformationen der aus Kunststoff bestehenden Teile führen.

**Patentansprüche**

1. Vorrichtung zum Aufbewahren von Aufzeichnungsträgern, wie Magnetbandkassetten, Disketten, Schall- oder Bildplatten, mit - einem im wesentlichen rechteckigen Gehäuseteil, (30)
   - einem im Gehäuseteil geführten und zur Aufnahme der Aufzeichnungsträger ausgebildeten Transportschieber (34), der die Aufzeichnungsträger aus einer Aufbewahrungsposition, in der sie vollständig im Gehäuseteil eingeschlossen sind, in eine Entnahmeposition fördert, in der sie bequem erfaßbar sind,
   - einer Federanordnung (46), die den Transportschieber in die äußere Entnahmeposition vorspannt, und
   - einer Verriegelungsanordnung (56), die in der Aufbewahrungsposition des Transportschiebers formschlüssig ineinandergreifende Elemente umfaßt, durch Einschieben des Transportschiebers aus seiner Entnahmeposition verriegelbar ist und durch sein erneutes Einschieben entriegelbar ist, wobei die Verriegelungsanordnung umfaßt:
   (a) ein Kupplungsteil (60), das an dem Gehäuseteil (oder dem Transportschieber) beweglich angeordnet, jedoch in Schieberbewegungsrichtung abgestützt ist,
   (b) Steuerflächen (82, 84, 88, 106, 110) am Transportschieber (oder Gehäuseteil) zum Führen des Kupplungsteils längs eines ersten Weges beim Verriegeln und längs eines zweiten Weges beim Entriegeln,

dadurch gekennzeichnet, daß die Bewegungsbahn des Kupplungsteils zwei zueinander senkrechte Komponenten aufweist, von denen mindestens eine senkrecht zur Schieberbewegungsrichtung ist, und daß das Kupplungsteil in Richtung mindestens einer der Komponenten in die Ver- bzw. Entriegelungslage federforgespannt (86) ist.

2. Vorrichtung nach Anspruch 1, dadurch gekennzeichnet, daß die Verriegelungsanordnung an einer Stelle angeordnet ist, an der der Hebelarm, an welchem die Federanordnung (46) angreift, bezüglich der Verriegelungsanordnung kurz ist im Verhältnis zu den Gehäuse- und Transportschieberabmessungen.

3. Vorrichtung nach Anspruch 1, bei der das Gehäuseteil eine Rückwand gegenüber einer den Transportschieberdurchtritt bildenden Öffnung aufweist und der Transportschieber eine zur Gehäuserückwand parallele Rückwand besitzt, dadurch gekennzeichnet, daß das Kupplungsteil (60) in einer der Rückwände angeordnet ist.

4. Vorrichtung nach Anspruch 3, dadurch gekennzeichnet, daß die Steuerflächen an mit der anderen Rückwand verbundenen Bauteilen ausgebildet sind.

5. Vorrichtung nach Anspruch 3, dadurch gekennzeichnet, daß die Steuerflächen an einer zu der anderen Rückwand senkrecht verlaufenden Seitenwandung (402) ausgebildet sind.

6. Vorrichtung nach Anspruch 3, dadurch gekennzeichnet, daß die Steuerflächen an einer zu der andern Rückwand senkrecht verlaufenden Bodenwandung ausgebildet sind.

7. Vorrichtung nach Anspruch 1, dadurch gekennzeichnet, daß das Kupplungsteil und die Steuerflächen in zueinander und zu der Transportschieberbewegungsrichtung parallelen Wandungen der beiden Teile vorgesehen sind.

8. Vorrichtung nach Anspruch 1, gekennzeichnet durch drei nacheinander in Wirkverbindung mit dem Kupplungsteil tretende Steuerflächen.

9. Vorrichtung nach Anspruch 1, dadurch gekennzeichnet, daß an dem Kupplungsteil ein sich formschlüssig am andern Teil verriegelnder Verriegelungsfortsatz (80, 226) vorgesehen ist.

10. Vorrichtung nach Anspruch 9, dadurch gekennzeichnet, daß der Verriegelungsfortsatz in eine Richtungskomponente translatorisch geführt ist.

11. Vorrichtung nach Anspruch 10, dadurch gekennzeichnet, daß der Verriegelungsfortsatz in der andern Richtungskomponente rotatorisch geführt ist.

12. Vorrichtung nach Anspruch 9, dadurch gekennzeichnet, daß der Verriegelungsfortsatz längs zwei Kreisbögen mit zueinander senkrechten Achsen geführt ist.

13. Vorrichtung nach Anspruch 9, dadurch gekennzeichnet, daß der Verriegelungsfortsatz (226) eine Hinterschneidung (228) aufweist, der eine komplementäre Hinterschneidung (238) am anderen Teil zugeordnet ist.

14. Vorrichtung nach Anspruch 1, dadurch gekennzeichnet, daß das Kupplungsteil in eine käfigartige Riegelführung eingesetzt ist.

15. Vorrichtung nacn Ansprüch 12, dadurch gekennzeichnet daß das Kupplungsteil im wesentlichen kreisscheibenförmig ist und in eine komplementäre Durchbrechung einer Wandung eines der beiden Teile drehbar eingesetzt ist.

16. Vorrichtung nach Anspruch 15, dadurch gekennzeichnet, daß das Kupplungsteil zum Verriegeln in einem ersten Drehsinn um einen begrenzten Winkel drehbar geführt ist und zum Entriegeln in dem anderen Drehsinn um einen begrenzten Winkel drehbar geführt ist.

17. Vorrichtung nach Anspruch 16, dadurch gekennzeichnet, daß das Kupplungsteil zum Verriegeln zunächst im ersten, danach im anderen Drehsinn um einen begrenzten Winkel drehbar geführt ist.

18. Vorrichtung nach Anspruch 17, dadurch gekennzeichnet, daß der Verriegelungsfortsatz (226) an einer sich als radiale Speiche vom Zentrum des Kupplungsteils wegerstreckenden und aus der Wandungsebene auslenkbaren Blattfeder ausgebildet ist.

19. Vorrichtung nach Anspruch 11, dadurch gekennzeichnet, daß das Kupplungsteil Lagerzapfen (68, 70) umfaßt, die in einem Langloch (98) verschieblich sind und um die das Kupplungsteil schwenkbeweglich ist.

20. Vorrichtung nach Anspruch 19, gekennzeichnet durch Anschläge (96) zur Begrenzung der Verschiebe- und Schwenkbewegungen.

21. Vorrichtung nach Anspruch 1, dadurch gekennzeichnet, daß das Kupplungsteil für jede Führungsfläche eine gesonderte Führungskante oder Führungsfläche aufweist.

22. Vorrichtung nach Anspruch 1, dadurch gekennzeichnet, daß der Schieber eine mit einer Betätigungsleiste versehene Frontwandung aufweist.

23. Vorrichtung nach Anspruch 1, dadurch gekennzeichnet, daß der Schieber eine als Betätigungstaste ausgebildete Frontwand aufweist.

24. Vorrichtung nach Anspruch 23, dadurch gekennzeichnet, daß die Frontwand eine abgerundete Kontur aufweist, die die Kanten einer von ihr abgedeckten Gehäuseöffnung schützend überdeckt.

25. Vorrichtung nach Anspruch 1, dadurch gekennzeichnet, daß das Gehäuseteil, der Transportschieber und das Kupplungsteil im wesentlichen aus Kunststoff bestehen.

26. Vorrichtung nach Anspruch 25, dadurch gekennzeichnet, daß die Teile aus warmverformbarem Kunststoff gespritzt sind.

## Claims

1. Device for storing recording media, such as magnetic tape cassettes, diskettes and audio or video discs, having
- a substantially rectangular housing part (30),
- a transport slider member (34) which is guided in the housing part, is designed to accommodate the recording media and which conveys the recording media from a storage position in which they are completely enclosed in the housing part into a removal position in which they can be easily grasped,
- a spring arrangement (46) which biases the transport slider member into the outer removal position, and
- a locking arrangement (56) which comprises elements that, in the storage position of the transport slider member, engage in one another so that they are positively locked, and which can be locked by pushing in the transport slider member from its removal position and can be unlocked by pushing the transport slider member in again,
wherein the locking arrangement comprises (a) a coupling part (60) which is movably arranged on the housing part (or transport slider member), but is supported in the direction of movement of the slider member,
(b) control surfaces (82, 84, 88, 106, 110) on the transport slider member (or housing part) for guiding the coupling part along a first path when locking and along a second path when unlocking,
characterized in that the path of movment of the coupling part (60) has two components perpendicular to one another, of which at least one is perpendicular to the direction of movement of the slider member, and the coupling part is spring biased (86) in the direction of at least one of the components into the locking or unlocking position.

2. Device according to claim 1, characterized in that the locking arrangement is arranged at a position at which the lever arm on which the spring arrangement (46) acts is short with respect to the locking arrangement and in comparison with the dimensions of the housing and the transport slider member.

3. Device according to claim 1, in which the housing part has a rear wall opposite an opening forming an aperture for the transport slider member, and in which the transport slider member has a rear wall parallel to the rear wall of the housing, characterized in that the coupling part (60) is arranged in one of the rear walls.

4. Device according to claim 3, characterized in that the control surfaces are formed on components connected to the other rear wall.

5. Device according to claim 3, characterized in that the control surfaces are formed on a side wall (402) running perpendicularly to the other rear wall.

6. Device according to claim 3, characterized in that the control surfaces are formed on a base wall running perpendicularly to the other rear wall.

7. Device according to claim 1, characterized in that the coupling part and the control surfaces are provided in walls, which are parallel to one another and to the direction of movement of the transport slider member, of the two parts.

8. Device according to claim 1, characterized by three control surfaces which enter in succession into effective connection with the coupling part.

9. Device according to claim 1, characterized in that there is provided on the coupling part a locking projection (80, 226) that positively locks on the other part.

10. Device according to claim 9, characterized in that the locking projection is guided in translatory manner in one directional component.

11. Device according to claim 10, characterized in that the locking projection is guided in rotary manner in the other directional component.

12. Device according to claim 9, characterized in that the locking projection is guided along two circular arcs having axes that are perpendicular to one another.

13. Device according to claim 9, characterized in that the locking projection (226) has an undercut (228) which is associated with a complementary undercut (238) on the other part.

14. Device according to claim 1, characterized in that the coupling part is inserted into a cage-like catch guide.

15. Device according to claim 12, characterized in that the coupling part is substantially in the form of a circular disc and is inserted so that it can rotate into a complementary aperture in a wall of one of the two parts.

16. Device according to claim 15, characterized in that the coupling part is arranged for pivotal movement In a first direction of rotation through a limited angle for locking and is arranged for pivotal movement in the other direction of rotation through a limited angle for unlocking.

17. Device according to claim 16, characterized in that the coupling part is arranged for pivotal movement firstly in the first and then in the other direction of rotation through a limited angle.

18. Device according to claim 17, characterized in that the locking projection (226) is formed on a leaf spring that extends away from the centre of the coupling part like a radial spoke and can be deflected out of the plane of the wall.

19. Device according to claim 11, characterized in that the coupling part has bearing pins (68, 70) which are displaceable in an elongate hole (98) and about which the coupling part can be swivelled.

20. Device according to claim 19, characterized by stops (96) for limiting the displacement and swivelling movements.

21. Device according to claim 1, characterized in that the coupling part has a separate guide edge or guide surface for each guide surface.

22. Device according to claim 1, characterized in that the slider member has a front wall provided with an actuating bar.

23. Device according to claim 1, characterized in that the slider member has a front wall constructed as an actuating button.

24. Device according to claim 23, characterized in that the front wall has a rounded contour which covers over, in protective manner, the edges of a housing opening covered by it.

25. Device according to claim 1, characterized in that the housing part, the transport slider member and the coupling part consist substantially of plastics material.

26. Device according to claim 25, characterized in that the parts are injection-moulded from heat-deformable plastics material.

**Revendications**

1. Dispositif pour stocker des supports d'enregistrement, tels que des cassettes à bande magnétique, des disquettes, des disques ou des disques vidéo, et comportant
- un élément formant boîtier sensiblement rectangulaire (30),
- un coulisseau de transport (34), qui est guidé dans l'élément formant boîtier, et agencé de manière à recevoir les supports d'enregistrement et qui déplace les supports d'enregistrement depuis une position de stockage, dans laquelle ils sont complètement enserrés dans l'élément formant boîtier, dans une position de prélèvement, dans laquelle ils peuvent être saisis commodément,
un dispositif à ressort (46), qui repousse le coulisseau de transport dans la position extérieure de prélèvement, et
- un dispositif de verrouillage (56), qui comporte des éléments engrenant entre eux selon une liaison par formes complémentaires dans la position de stockage du coulisseau de transport, qui peut être verrouillé sous l'effet de l'introduction du coulisseau de transport à partir de sa position de prélèvement et peut être déverrouillé sous l'effet d'une nouvelle introduction du coulisseau,
le dispositif de verrouillage comprenant:
a) un élément d'accouplement (60), qui est monté mobile sur l'élément formant boîtier (ou le coulisseau de transport), mais est soutenu dans la direction de déplacement du coulisseau,
b) des surfaces de commande (82, 84, 88, 106, 110) présentes sur le coulisseau de transport (ou l'lément formant boîtier) pour guider l'élément d'accouplement le long d'un premier trajet lors du verrouillage et le long d'un second trajet lors du déverrouillage,
caractérisé en ce que la voie de déplacement de l'élement d'accouplement (60) comporte deux composantes perpendiculaires entre elles, dont une au moins est une composante perpendiculaire à la direction de déplacement du coulisseau, et en ce que l'élément d'accouplement est repoussé par le ressort (86), dans la direction d'au moins l'une des

composantes, dans la position de verrouillage ou de déverrouillage.

2. Dispositif selon la revendication 1, caractérisé en ce que le dispositif de verrouillage est disposé en un emplacement au niveau duquelle bras formant levier, auquel le dispositif à ressort (46) est accroché, est court, en ce qui concerne le dispositif de verrouillage, par rapport aux dimensions du boîtier et du coulisseau de transport.

3. Dispositif selon la revendication 1, selon lequel l'élément formant boîtier comporte une paroi arrière en vis-à-vis d'une ouverture formant un passage pour le coulisseau de transport, et le coulisseau de transport possède une paroi arrière parallèle à la paroi arrière du boîtier, caractérisé en ce que l'élément d'accouplement (60) est disposé dans l'une des parois arrière.

4. Dispositif selon la revendication 3, caractérisé en ce que les surfaces de commande sont formées sur des composants reliés à l'autre paroi arrière.

5. Dispositif selon la revendication 3, caractérisé en ce que les surfaces de commande sont formées sur une paroi latérale (402) perpendiculaire à l'autre paroi arrière.

6. Dispositif selon la revendication 3, caractérisé en ce que les surfaces de commande sont formées sur une paroi de base perpendiculaire à l'autre paroi arrière.

7. Dispositif selon la revendication 1, caractérisé en ce que l'élément d'accouplement et les surfaces de commande sont prévus dans des parois des deux éléments, qui sont parallèles entre elles et à la direction de déplacement du coulisseau de transport.

8. Dispositif selon la revendication 1, caractérisé par trois surfaces de commande qui établissent successivement une liaison active avec l'élément d'accouplement.

9. Dispositif selon la revendication 1, caractérisé en ce qu'il est prévu, sur l'élément d'accouplement, un appendice saillant de verrouillage (80, 226) qui se verrouille selon une liaison par formes complémentaires sur l'a-tre élément.

10. Dispositif selon la revendication 9, caractérisé en ce que l'appendice saillant de verrouillage est guidé en translation suivant une composante directionnelle.

11. Dispositif selon la revendication 10, caractérisé en ce que l'appendice saillant de verrouillage est guidé en rotation suivant l'autre composante directionnelle.

12. Dispositif selon la revendication 9, caractérisé en ce que l'appendice saillant de verrouillage est guidé le long de deux arcs de cercle dont les axes sont perpendiculaires entre eux.

13. Dispositif selon la revendication 9, caractérisé en ce que l'appendice saillant de verrouillage (226) comporte une contre-dépouille (228) à laquelle est associée une contre-dépouille complémentaire (238) située sur l'autre élément.

14. Dispositif selon la revendication 1, caractérisé en ce que l'élément d'accouplement est inséré dans un guide de verrou en forme de cage.

15. Dispositif selon la revendication 12, caractérisé en ce que l'élément d'accouplement possède sensiblement la forme d'un disque circulaire et est inséré de manière à pouvoir tourner dans un perçage complémentaire ménagé dans une paroi de l'un des deux éléments.

16. Dispositif selon la revendication 15, caractérisé en ce que l'élément d'accouplement est guidé de manière à pouvoir tourner sur un angle limité dans un premier sens de rotation, pour le verrouillage, et est guidé de manière à pouvoir tourner sur un angle limité dans l'autre sens de rotation, pour le déverrouillage.

17. Dispositif selon la revendication 16, caractérisé en ce que, pour le verrouillage, l'élément d'accouplement est guidé de manière à pouvoir tourner sur un angle limité tout d'abord dans le premier sens de rotation, puis dans l'autre sens de rotation.

18. Dispositif selon la revendication 17, caractérisé en ce que l'appendice saillant de verrouillage (226) est formé sur un ressort en forme de lame, qui s'étend sous la forme d'un rayon à partir du centre de l'élément d'accouplement et peut être écarté par flexion à partir du plan de la paroi.

19. Dispositif selon la revendication 11, caractérisé en ce que l'élément d'accouplement comporte des tourillons (68, 70) qui sont mobiles dans un trou allongé (98) et autour desquels l'élément d'accouplement peut basculer.

20. Dispositif selon la revendication 19, caractérisé par des butées (96) servant à limiter les mouvements de translation et de basculement.

21. Dispositif selon la revendication 1, caractérisé en ce que l'élément d'accouplement comporte, pour chaque surface de guidage, une arête ou une surface de guidage particulière.

22. Dispositif selon la revendication 1, caractérisé en ce que le coulisseau comporte une paroi avant munie d'une barrette d'actionnement.

23. Dispositif selon la revendication 1, caractérisé en ce que le coulisseau comporte une paroi avant réalisée sous la forme d'une touche d'actionnement.

24. Dispositif selon la revendication 2, caractérisé en ce que la paroi avant possède un contour arrondi, qui recouvre, avec une action de protection, les arêtes d'une ouverture du boîtier, recouvertes par cette paroi.

25. Dispositif selon la revendication 1, caractérisé en ce que l'élément formant boîtier, le coulisseau de transport et l'élément d'accouplement sont réalisés essentiellement en une matière plastique.

26. Dispositif selon la revendication 25, caractérisé en ce que les éléments sont formés par moulage par injection d'une matière plastique déformable à chaud.

*Fig.1*

*Fig.2*

*Fig.3*

Fig.4

Fig.6

Fig.5

*Fig.7*

*Fig.10*

*Fig.9*

*Fig.8*

**Fig.11**

0 134 278

Fig.13

Fig.14

Fig.12

**Fig.15**

**Fig.16**

500

526

518  514  518

524  526

**_Fig.17_**

500  510

504  512  508  520
506  522  502

504  508  520
506  502

512  510  522

**_Fig.18_**

Fig.19

Fig.20